# FASCICULE DE BREVET EUROPEEN

(11) **EP 1 766 437 B1**
(45) Date de publication et mention de la délivrance du brevet: **19.03.2014**
(21) Numéro de dépôt: 05789965.0
(22) Date de dépôt: 07.07.2005
(51) Int. Cl.: G01T 1/24, G01T 1/29

(54) **DISPOSITIF ET PROCEDE DE MESURE DE L'ENERGIE ET DE LA POSITION D'UNE PARTICULE IONISANTE, INCIDENTE DANS UN DETECTEUR**
EINRICHTUNG UND VERFAHREN ZUR MESSUNG DER ENERGIE UND POSITION EINES EINFALLENDEN IONISIERENDEN PARTIKELS IN EINEM DETEKTOR
DEVICE AND METHOD FOR MEASURING THE ENERGY AND POSITION OF AN INCIDENT IONISING PARTICLE IN A DETECTOR

(30) Priorité: 09.07.2004 FR 0451491
(43) Date de publication de la demande: 28.03.2007
(73) Titulaire: Commissariat à l'Énergie Atomique et aux Énergies Alternatives, 75015 Paris (FR)
(72) Inventeur: GROS D'AILLON, Eric, F-38000 GRENOBLE (FR); VERGER, Loïck, F-38000 GRENOBLE (FR)
(74) Mandataire: Ahner, Philippe
(86) Numéro de dépôt international: PCT/FR2005/050553
(87) Numéro de publication internationale: WO 2006/008419

(56) Documents cités:
- WO-A-02/063339
- FR-A- 2 738 919
- FR-A- 2 790 560

## Description

### DESCRIPTION

### DOMAINE TECHNIQUE ET ART ANTÉRIEUR

L'invention concerne le domaine de l'imagerie X ou gamma, pour la haute résolution spatiale à base de semi-conducteur. Par example, WO 02/063339 divulge un dispositif de détection de rayonnement comportant un détecteur en matériau semi-conducteur, une première et une deuxième électrodes.

Elle peut être aussi utilisée pour l'imagerie de petits animaux avec un détecteur monolithique en CdZnTe.

L'invention est aussi applicable à n'importe quel détecteur à base de semi-conducteur où l'on veut localiser la position d'interaction d'un rayonnement dans le détecteur. Elle convient aussi pour la localisation de protons, ou de particules alpha dans de tels détecteurs.

On connaît un procédé de tri, en temps réel, d'évènements dans un détecteur : un tel procédé est décrit dans le document FR-2 790 560.

Cependant, cette technique n'est pas satisfaisante dans le cas de petits pixels.

En effet, pour des petits pixels, millimétriques ou submillimétriques, cette méthode impose des contraintes fortes sur le matériau détecteur.

Pour que le signal sur chaque pixel soit représentatif du photon détecté, le matériau doit être suffisamment homogène. Or la présence de défauts dans le matériau, tels que par exemple des macles ou des inclusions de tellure dans le cas du CdZnTe, altère la qualité du signal. De plus, avec des petits pixels, le temps de montée du signal devient d'autant plus difficile à mesurer que la taille du pixel diminue, ce qui rend moins efficace une correction de type biparamétrique (amplitude, temps de montée). C'est en particulier le cas lorsque la plus petite dimension de chaque pixel devient inférieure au quart de l'épaisseur du détecteur.

Le problème est de mesurer à la fois la position d'interaction du photon (en x, y) et son énergie.

Pour cela on dispose d'un signal induit sur les anodes et de celui induit sur la cathode.

Les techniques utilisées actuellement pour faire de l'imagerie à haute résolution spatiale utilisent le signal issu des anodes pour mesurer l'énergie et la position (x, y).

Certaines techniques utilisent le rapport du signal cathode sur le signal anode, rapport qui ne dépend que de la profondeur d'interaction pour corriger la mesure de l'énergie mesurée sur l'anode. Cette mesure est à corriger car le signal anode dépend de la profondeur d'interaction.

Cependant, toutes ces techniques reposent sur la bonne mesure du signal de l'anode, ce qui pose des contraintes fortes sur le matériau détecteur.

### EXPOSÉ DE L'INVENTION

L'invention concerne d'abord un dispositif de détection de rayonnement selon la revendication 1.

Un tel détecteur, à première électrode pixellisée, permet, selon l'invention, de séparer la localisation des interactions (en x, y) et la mesure de l'énergie.

Chaque pixel est par exemple inscrit dans un carré de côté compris entre 10 µm et 2 mm ou inférieur à la moitié de l'épaisseur du détecteur.

La deuxième électrode peut être pleine, ou segmentée, ou avoir la forme de pixels, à un deuxième pas supérieur au premier pas.

Le détecteur est par exemple en CdZnTe ou en CdHgTe ou en CdTe.

Un tel détecteur, à première électrode pixellisée, permet, selon l'invention, de séparer la localisation des interactions (en x, y) et la mesure de l'énergie.

La localisation est faite par les anodes et l'énergie est mesurée uniquement avec la cathode (ou l'anode).

Comme la cathode (ou l'anode) intègre le mouvement des électrons dans l'ensemble du volume du détecteur la contrainte sur l'homogénéité du matériau est levée.

Des moyens permettent d'identifier la position d'un photon incident dans le détecteur en fonction de signaux provenant des pixels de la première électrode. La position d'interaction d'un photon dans le détecteur est donc, quant à elle, identifiée uniquement à l'aide de la première électrode.

L'invention concerne donc également un procédé de détection d'un rayonnement mettant en oeuvre un dispositif tel que décrit ci-dessus, dans lequel l'énergie d'un photon dans le détecteur est identifiée uniquement à l'aide des signaux des pixels de la deuxième électrode.

Si le signal induit dans le détecteur est un signal d'électrons, la première électrode est l'anode.

Si le signal induit dans le détecteur est un signal de trous, la première électrode est la cathode.

A la différence des systèmes existants qui mesurent, au moins partiellement, l'énergie avec le signal anode (dans le cas d'un signal d'électrons), ou avec le signal cathode (dans le cas d'un signal de trous), l'invention propose de n'utiliser pour cela que le signal cathode, respectivement anode.

### BRÈVE DESCRIPTION DES DESSINS

- Les figures 1A-1C représentent un détecteur selon l'invention,
- les figures 2 et 3 représentent un dispositif de mesure avec détecteur selon l'invention.

### EXPOSE DETAILLE DE MODES DE REALISATION DE L'INVENTION

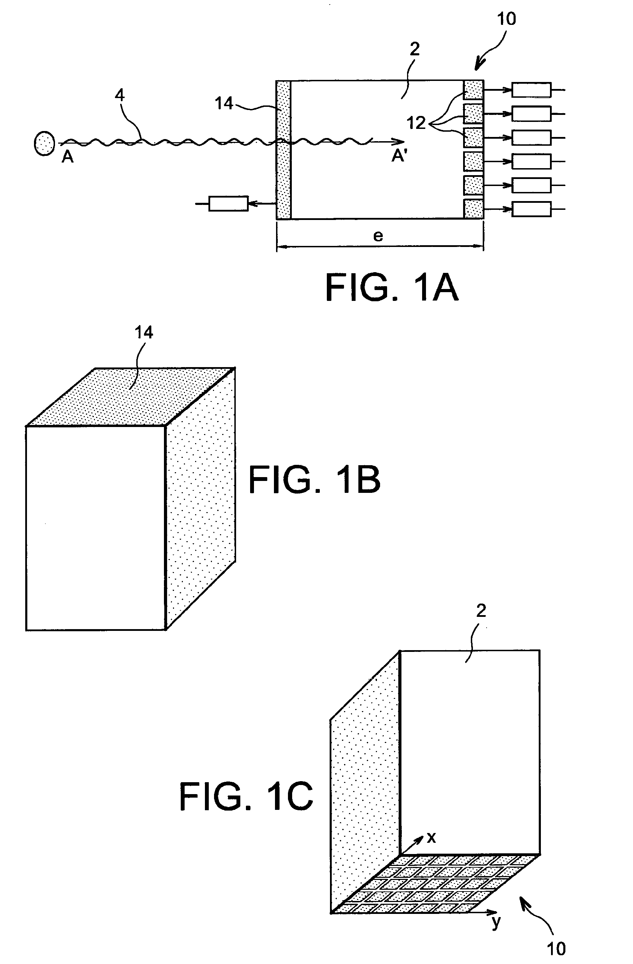

Un premier exemple de réalisation de l'invention est illustré sur les figures 1A-1C.

Il concerne un détecteur 2 CdZnTe, dans lequel vient interagir un rayonnement 4, par exemple de type gamma.

L'anode 10 du détecteur est constituée de pixels 12 répartis sur une face de ce détecteur. Les pixels mesurent par exemple entre 10 µm et 2 mm de côté, ou sont chacun compris ou inscrit dans un carré de côté compris entre 10 µm et 2 mm ou, plus généralement dans un carré de côté inférieur à la moitié de l'épaisseur e du détecteur (distance séparant les faces cathode et anode du détecteur). Ils sont répartis selon un pas par exemple compris entre 20 µm et 2,5 mm.

Si on considère deux pixels de même forme, ce pas du détecteur est la distance entre le centre (ou un autre point) d'un pixel et le centre (ou le même point) du pixel le plus proche. Dans le cas de pixels en forme de bande, on peut utiliser une médiane de la bande.

En particulier, chaque pixel peut avoir une plus petite dimension inférieure au quart de l'épaisseur du détecteur 2.

Dans l'exemple illustré sur les figures, la cathode 14 est en pleine face sur l'autre face du détecteur.

Les pixels sont localisés à l'anode et la cathode est en pleine face car il s'agit de travailler avec un signal d'électrons, notamment lorsque le détecteur est en CdZnTe, dans lequel la durée de vie des trous est très faible.

Mais il est possible de travailler avec un signal trou (ou un signal mixte), et dans ce cas la cathode est pixellisée et l'anode est pleine.

Dans le cas du signal d'électrons, on peut travailler avec une cathode pleine face, comme indiqué ci-dessus, ce qui donne les meilleurs résultats. Cependant, la même technique peut être mise en oeuvre avec une cathode qui ne couvre qu'une partie de la face, ou encore avec une cathode segmentée. Ou encore, la cathode peut être elle aussi pixellisée, à un pas plus grand que l'anode.

On peut utiliser un détecteur en CdZnTe ou en CdTe. Cependant, d'autres semi-conducteurs (CdHgTe ou CdTe dopé C1 ou In ou A1 ou CdZnTe dopé Cl ou In etc.) sont utilisables. De manière générale des semi-conducteurs à haute résistivité (10⁸-10¹² . Ω_{cm}⁻¹) peuvent être utilisés.

Les détecteurs utilisés peuvent être des parallélépipèdes rectangles qui mesurent entre 3 mm et 100 mm de coté et entre 1 mm et 30 mm de haut.

Mais l'invention peut être mise en oeuvre avec d'autres dimensions.

Les pixels sont représentés carrés sur la figure 1C, mais d'autres formes (triangles, hexagones, disques, bandes...) sont envisageables.

En fonctionnement, le détecteur est polarisé à l'aide de moyens de polarisation.

Un photon 4 (par exemple un photon gamma) arrive dans le détecteur coté cathode 14.

Il crée des paires électrons-trous qui migrent vers les anodes 10 sous l'effet du champ appliqué.

Chaque bloc 20 en sortie du bloc détecteur représente des moyens constituant une voie de mesure (avec au moins un préampliplificateur, et un amplificateur suivi d'un traitement adapté (carte électronique, ASIC, ou numérisation par exemple)).

Sur chaque pixel 12, on mesure la charge déposée. Chaque pixel a sa voie de traitement du signal.

L'ensemble de ces mesures permet de remonter à la position d'interaction (x, y) du photon 4 dans le détecteur.

Sur la cathode (ou sur les segments ou les pixels de la cathode si il s'agit d'une cathode segmentée) sont mesurées à la fois l'amplitude et le temps de montée du signal, comme décrit dans le document FR - 2 790 560 mais sur l'anode.

Cette information permet de mesurer l'énergie du photon incident avec une précision suffisante pour les applications visées.

On obtient ainsi des résolutions en énergie inférieures à 15 %.

Selon l'invention, chaque électrode est donc dédiée à une mesure : l'électrode pixellisée, ou à pas le plus faible, est utilisée pour la mesure de la position, dans la plan X, Y du détecteur (figure 1C), ou sensiblement perpendiculairement à l'axe d'incidence AA' (figure 1A) du photon, de l'évènement que constitue l'interaction de ce photon avec le matériau du détecteur.

L'autre électrode, qui peut être commune à tous les pixels ou elle aussi sous forme de pixels, mais à pas plus grand, comme expliqué ci-dessus, permet la mesure de l'énergie.

Ces mesures sont indépendantes l'une de l'autre, contrairement aux procédés décrits dans l'art antérieur.

Un procédé de traitement ou de correction biparamétrique tel qu'exposé dans le document FR-2 790 560 peut être mis en oeuvre pour améliorer la résolution en énergie.

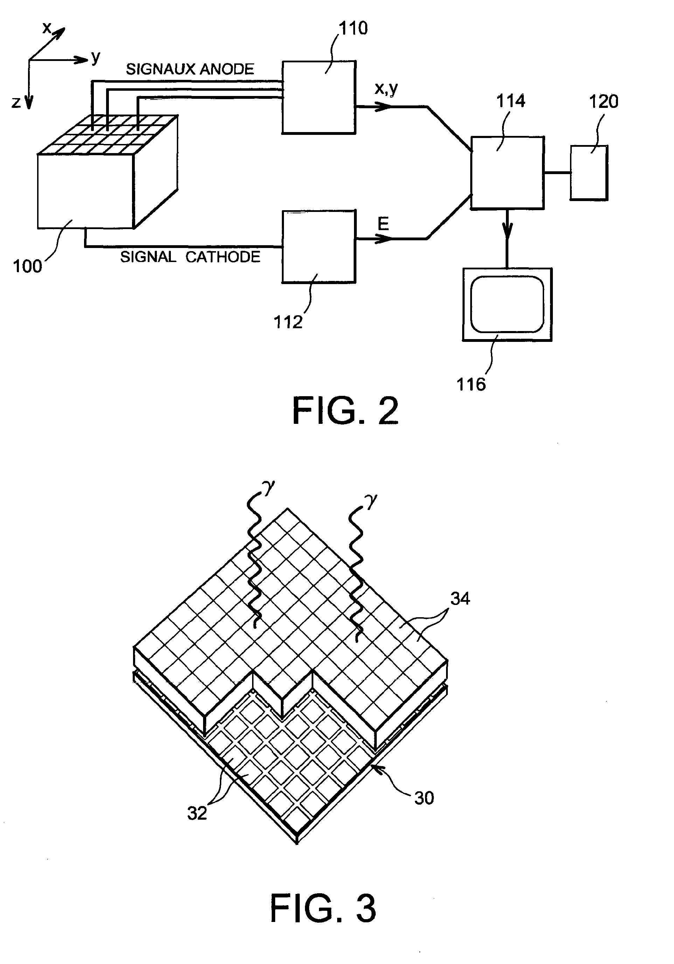

Un procédé selon l'invention peut être mis en oeuvre à l'aide d'un dispositif tel qu'illustré sur la figure 2.

La référence 100 sur la figure 2 désigne une matrice d'éléments de détection 102 à semi-conducteur, agencées dans un plan de détection.

La figure 3 montre l'exemple d'une structure d'un détecteur à semi-conducteur. Celui-ci comprend une plate-forme 30 équipée de circuits électroniques 32 intégrés et sur laquelle est montée une pluralité d'éléments de détection 34.

Les éléments de détection 34 se présentent chacun sous la forme d'un bloc de semi-conducteur avec deux faces parallèles opposées sur lesquelles sont prévues des électrodes. Un champ électrique appliqué sur les électrodes permet de faire migrer les porteurs de charges, c'est-à-dire les électrons et les trous formés par l'interaction du rayonnement avec le semi-conducteur.

Les électrodes de chaque élément de détection, non représentées sur la figure, mais ayant la forme indiquée ci-dessus selon l'invention, sont également prévues pour recevoir les charges et les transférer vers les circuits intégrés de la plate-forme 30 pour la formation d'un signal de détection.

Les signaux d'anode délivrés par les éléments de détection sont dirigés vers un premier circuit intégré par exemple un circuit intégré spécifique (ASIC) 110. Ce circuit comprend des voies d'amplification des signaux pour chaque élément de détection et des moyens de multiplexage des voies.

Un deuxième circuit 112 est prévu pour déterminer l'amplitude et le temps de montée de chaque signal issu de la cathode et pour mettre en forme des données correspondant à ces grandeurs, ainsi que des données représentant les coordonnées des événements.

Les coordonnées des événements sont liées à la position de l'élément de détection correspondant dans le plan de détection. Un circuit tel que le circuit 112 est par exemple décrit dans le document FR-2 738 919.

Les données sont dirigées vers un ordinateur 114 destiné à effectuer les calculs et traitements liés à la phase de calibrage et destiné à construire une image (par exemple médicale) à partir des données lors de la phase d'acquisition. L'image est affichée sur un écran 116.

Les données pour mettre en oeuvre un procédé de traitement peuvent être mémorisées dans l'ordinateur 114 ou dans une mémoire indiquée par la référence 120 sur la figure 2. Lors de la phase d'acquisition, les circuits 110 et 112 établissent les données d'amplitude, de temps de montée et de coordonnées des événements à partir des signaux des éléments de détection.

A partir des informations indépendantes de position (en x, y dans le plan de l'anode, voir figure 2) et d'énergie (signal de cathode), les moyens 114 peuvent calculer la position dans la profondeur du détecteur.

Un spectre peut être obtenu et affiché à l'écran 116 au cours d'une acquisition. Un dispositif et un procédé selon l'invention peuvent être utilisés dans le cadre d'examens pratiqués sur de petits animaux.

## Revendications

1. Dispositif de détection de rayonnement, comportant un détecteur (2) en matériau semi-conducteur, une première et une deuxième électrodes (10, 14),
la première électrode (10) ayant la forme de pixels (12), avec un premier pas, dans un plan d'un des côtés du détecteur, **caractérisé en ce que** le dispositif comporte en outre :
- des moyens (112, 114, 120) adaptés pour identifier l'énergie d'un photon incident dans le détecteur en fonction de signaux provenant uniquement de la deuxième électrode;
- des moyens (110, 114, 120) adaptés pour identifier la position d'un photon incident dans ledit plan en fonction de signaux provenant uniquement de la première électrode.

2. Dispositif selon la revendication 1, chaque pixel étant inscrit dans un carré de côté inférieur à la moitié de l'épaisseur du détecteur.

3. Dispositif selon la revendication 1 ou 2, dans lequel la deuxième électrode (14) est pleine.

4. Dispositif selon la revendication 1 ou 2, dans lequel la deuxième électrode (14) est segmentée.

5. Dispositif selon la revendication 1 ou 2, dans lequel la deuxième électrode (14) a la forme de pixels, à un deuxième pas supérieur au premier pas.

6. Dispositif selon l'une des revendications 1 à 5, dans lequel le détecteur est en CdZnTe ou en CdHgTe ou en CdTe ou en un matériau semi-conducteur de haute résistivité.

7. Procédé de détection d'un rayonnement mettant en oeuvre un dispositif selon l'une des revendications 1 à 6, dans lequel l'énergie d'un photon dans le détecteur est identifiée uniquement à l'aide des signaux de la deuxième électrode.

8. Procédé selon la revendication 7, le signal induit dans le détecteur étant un signal d'électrons, la première électrode étant l'anode.

9. Procédé selon la revendication 7, le signal induit dans le détecteur étant un signal de trous, la première électrode étant la cathode.

## Patentansprüche

1. Vorrichtung zur Messung von Strahlung, einen Detektor (2) aus Halbleitermaterial mit einer ersten und einer zweiten Elektrode (10, 14) umfassend, wobei die erste Elektrode (10) in einer Ebene einer der Seiten des Detektors die Form von Pixeln (12) mit einer ersten Teilung hat,
**dadurch gekennzeichnet, dass** die Vorrichtung außerdem umfasst :
- Einrichtungen (112, 114, 120), adaptiert zur Identifizierung der Energie eines in den Detektor einfallenden Photons in Abhängigkeit von Signalen, die nur von der zweiten Elektrode stammen;
- Einrichtungen (110, 114, 120), adaptiert zur Identifizierung der Position eines in der genannten Ebene in den Detektor einfallenden Photons in Abhängigkeit von Signalen, die nur von der ersten Elektrode stammen;

2. Vorrichtung nach Anspruch 1, wobei jedes Pixel enthalten ist in einem Quadrat mit einer Seitenlänge kleiner als die Hälfte der Dicke des Detektors.

3. Vorrichtung nach Anspruch 1 oder 2, bei der die zweite Elektrode (14) voll ist.

4. Vorrichtung nach Anspruch 1 oder 2, bei der die zweite Elektrode (14) segmentiert ist.

5. Vorrichtung nach Anspruch 1 oder 2, bei der die zweite Elektrode (14) die Form von Pixeln hat, mit einer zweiten Teilung, größer als die erste Teilung.

6. Vorrichtung nach einem der Ansprüche 1 bis 5, bei der der Detektor aus CdZnTe oder aus CdHgTe oder aus CdTe oder aus einem Halbleitermaterial mit einem hohen spezifischen Widerstand ist.

7. Verfahren zur Detektion einer Strahlung, wobei eine Vorrichtung nach einem der Ansprüche 1 bis 6 benutzt wird, bei der die Energie eines Photons in dem Detektor nur mit Hilfe der Signale der zweiten Elektrode identifiziert wird.

8. Verfahren nach Anspruch 7, wobei das in dem Detektor induzierte Signal ein Elektronensignal ist und die erste Elektrode die Anode ist.

9. Verfahren nach Anspruch 7, wobei das in dem Detektor induzierte Signal ein Löchersignal ist und die erste Elektrode die Katode ist.

## Claims

1. Radiation detection device, comprising a detector (2) in semi-conductor material, a first and a second electrode (10, 14),
the first electrode (10) having the form of pixels (12), with a first pitch, on one of the sides of the detector,
and **characterized in that** the device further comprises:
- means (112, 114, 120) adapted to identify the energy of an incident photon in the detector as a function of signals coming uniquely from the second electrode,
- means (110, 114, 120) adapted to identify the position of an incident photon in the detector as a function of signals coming uniquely from the first electrode.

2. Device according to claim 1, each pixel being inscribed in a square of side less than half the thickness of the detector.

3. Device according to claim 1 or 2, in which the second electrode (14) is full.

4. Device according to claim 1 or 2, in which the second electrode (14) is segmented.

5. Device according to claim 1 or 2, in which the second electrode (14) has the form of pixels, with a second pitch greater than the first pitch.

6. Device according to any of claims 1 to 5, in which the detector is in CdZnTe or in CdHgTe or in CdTe or in a high resistivity semi-conductor material.

7. Radiation detection method employing a device according to any one of claims 1 to 6, in which the energy of a photon in the detector is identified uniquely by means of signals from the second electrode.

8. Method according to claim 7, the signal induced in the detector being a signal of electrons, the first electrode being the anode.

9. Method according to claim 7, the signal induced in the detector being a signal of holes, the first electrode being the cathode.
